# EUROPEAN PATENT APPLICATION

(11) **EP 0 723 379 A2**
(43) Date of publication of application: **24.07.1996**
(21) Application number: 96850006.6
(22) Date of filing: 17.01.1996
(51) Int. Cl.: H04Q 7/38

(54) **Method and apparatus for allocating channels in a cellular system**

(30) Priority: 17.01.1995 US 373927
(71) Applicant: Hughes Aircraft Company, Los Angeles, California 90045-0066 (US)
(72) Inventor: Durvasula, Bhanu, Gaithersburg, Maryland 20877 (US)
(74) Representative: Karlsson, Leif Karl Gunnar

(57) **Abstract**

The present invention provides a method and apparatus for allocating channels in a cellular system (10) by selecting transmission channels based on a measured signal quality level for each channel. The method for allocating channels includes the steps of providing transmission channels suitable for transmission over a cell of the cellular system (10), defining a quality channel pool (56) having a range of acceptable signal quality levels (53), measuring the signal quality level for each channel, and placing into the quality channel pool (56) each channel having a signal quality level within the acceptable range (53). Channels are preferably selected from the pool (56) using a round robin selection technique. The corresponding apparatus comprises a channel unit (50) and a channel access processor (30). The channel unit (50) provides transmission channels and is adapted to measure the signal quality for each channel. The channel access processor (30) is in communication with the channel unit (50) and includes a routine for performing a channel allocation process (64) that selects channels based on a measured signal quality value for each channel, and preferably also uses the round robin technique.

## Description

### BACKGROUND OF THE INVENTION

Transmission channels in a cellular telephone system typically use a sequential channel selection protocol. During operation, channels may be allocated by first creating a list of potential channels, and then sequentially selecting channels from the list. The list is usually arranged as an ordered list, for example, a priority queue arrangement or a table. The channel selection protocol usually starts by selecting the first channel and determining if that channel is available for transmission. If the first channel is available, then the first channel is selected for transmission. If the first channel is not available, then the second channel's availability is checked. This process is repeated until a free channel is found, or until all of the channels in the list have been checked.

The above-described allocation method does not take signal quality into account when selecting a channel. In general, channels having a higher signal quality level transmit voice and other information with better clarity and overall performance than channels having a lower signal quality level.

Additionally, when using a sequential channel selection protocol, channels in the front of the list tend to be selected much more often than channels near the end of the list. The result is that transmission circuits associated with the first few channels wear out from overuse more quickly than other transmission circuits.

Accordingly, there is a need to improve the quality of channels selected for transmission in a digital cellular communication system, and to increase the lifetime of transmission hardware associated with selected channels.

### SUMMARY OF THE INVENTION

The present invention provides a method and apparatus for allocating transmission channels in a cellular communications system. Using the method and apparatus of the present invention, a transmission channel is selected based on a measured signal quality level. Preferably, a quality channel pool is created based on measured signal quality, and channels are selected for transmission from the quality channel pool.

The method of allocating channels preferably includes the steps of providing a plurality of channels suitable for transmission over a cell of the cellular system, defining a quality channel pool having a range of acceptable signal quality levels, measuring the signal quality level for each channel, and placing each channel having a signal quality level within the acceptable range into the quality channel pool. A transmission channel is selected from the channels placed in the pool. Transmission channels are preferably selected from the pool using a round robin selection process so that each channel in the pool is selected approximately the same number of times as other channels in the pool. Also, in a time division multiple access (TDMA) digital embodiment having multiple channels for each frequency, such as TDMA-3, the channel allocation process preferably selects partially packed frequencies before allocating a channel to an empty frequency.

The apparatus of the present invention preferably includes an apparatus for allocating channels for transmission over a cell of a cellular system. The apparatus comprises a channel unit and a channel access processor. The channel unit includes a plurality of channels, and is adapted to measure the signal quality for each channel. The channel access processor is in communication with the channel unit and includes a routine for performing a channel allocation process. The channel allocation process selects channels based on their measured signal quality value. The channel allocation process preferably includes the steps of defining a quality channel pool having a range of acceptable signal quality levels, receiving the signal quality level for each channel from the channel unit, and placing each channel having a signal quality level within the acceptable range into the pool. Transmission channels are selected from the pool; thus, only channels having acceptable quality are used for transmission. A round robin selection process is preferably used to spread usage approximately equally among the transmission channels, thereby reducing the cost of maintaining the corresponding hardware transmission unit. Also, in a digital embodiment having multiple channels for each frequency, such as TDMA-3, the channel allocation process preferably selects partially packed frequencies before allocating a channel to an empty frequency.

The invention itself, together with its attendant advantages, will best be understood by reference to the following detailed description, taken in conjunction with the accompanying drawings.

### BRIEF DESCRIPTION OF THE DRAWINGS

Figure 1 is a block diagram of a digital cellular network;
Figure 2 is a block diagram of the base station controller of Figure 1;
Figure 3 is a block diagram of the base transceiver station of Figure 2;
Figure 4 is a block diagram of the operations & maintenance center, channel access processor, and channel unit, all of which are shown in Figures 1-3;
Figure 5 is a message flow diagram of a call originating from a mobile subscriber using the digital cellular network of Figure 1;
Figure 6 is a message flow diagram of a call terminating to a mobile subscriber using the digital cellular network of Figure 1;
Figure 7 is a flow chart of a channel allocation process executed on the channel access processor shown in Figures 2 and 4; and
Figure 8 shows a flow chart of a TDMA-3 channel allocation process executed on the channel access processor shown in Figures 2 and 4.

### DETAILED DESCRIPTION OF THE DRAWINGS

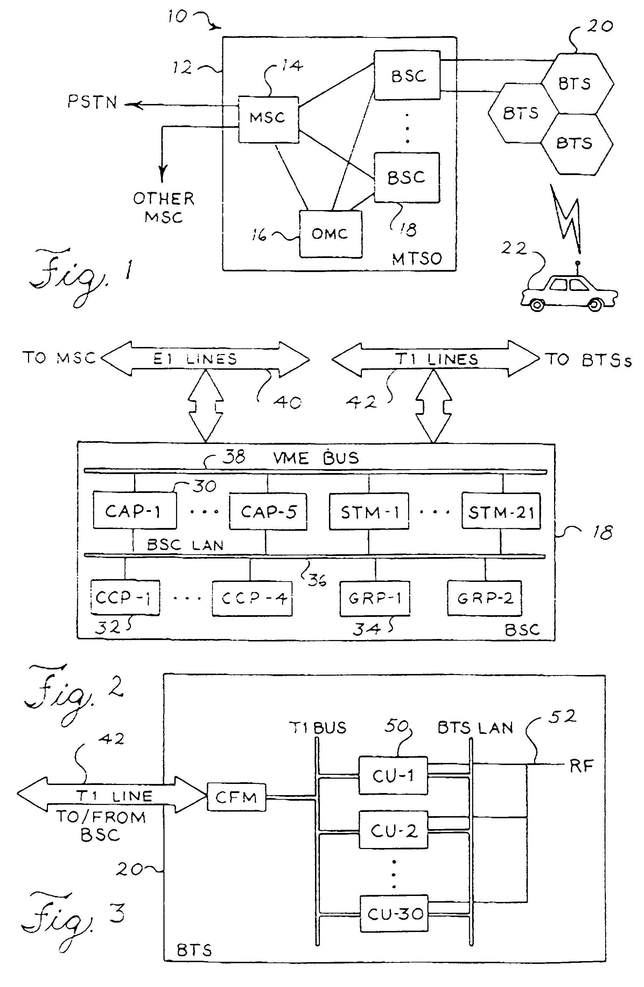

Figure 1 is a block diagram of a digital cellular network 10. The digital cellular network 10 includes a mobile telephone switching office (MTSO) 12. The MTSO 12 includes a mobile switching center (MSC) 14, an operations and maintenance center (OMC) 16, and a plurality of base station controllers (BSCs) 18. The MTSO 12 is in communication with the public switched telephone network (PSTN) and other mobile switching centers. The MSC 14 is in communication with the OMC 16, and is also in communication with at least one BSC 18. The BSC 18 is connected through a communication channel to one or more base transceiver stations (BTS) 20. Each BTS 20 may communicate over an RF frequency with a mobile subscriber 22.

A telephone "call" may be originated from the mobile subscriber 22 by transmitting initialization data over an RF control frequency assigned to a cell nearest the mobile subscriber 22. The call is transmitted via the RF frequency to the BTS 20 assigned to the cell servicing the subscriber 22. From the BTS 20, the call is routed to the BSC 18, and then to the MSC 14. From the MSC 14, the call is routed outside of the MTSO 12 to either another MSC or the PSTN. Thereafter, a communication channel is established through the entire digital cellular network 10, and the subscriber 22 may communicate over the established communication channel.

Calls may also originate from either another MSC or from the PSTN. Such a call enters the system 10 at the MSC 14, and is routed to one of the BSCs 18. The BSC 18 then pages the mobile subscriber 22 via the appropriate BTS 20. After the mobile subscriber 22 responds to the page from the BTS 20, a communication channel is established.

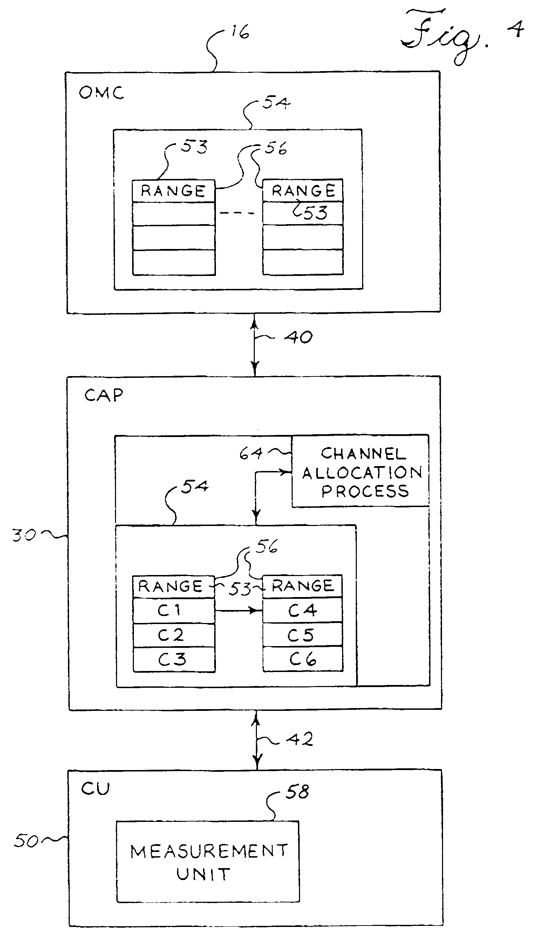

Figure 2 illustrates a preferred component layout for the BSC 18. The BSC 18 communicates with the MSC 14 over E1 transmission lines 40, and communicates with the BTS 20 over T1 transmission lines 42. The BSC 18 has several processors including a call control processor (CCP) 32, a global resource processor (GRP) 34, and a channel access processor (CAP) 30. The BSC 18 also includes a BSC local area network (LAN) 36 and a VME bus 38. The VME bus 38 is used to communicate between the various CAPs 30, while the LAN 36 allows communication between the CCPs 32.

Each processor (30, 32, and 34) shown in Figure 2 is preferably a 32 bit microprocessor such as an Intel 960. The processors (30, 32, and 34) are preferably operated with a multitasking software operating system such as UNIX or, most preferably, the VX WORKS operating system available from Wind River Systems.

Each processor (30, 32, and 34) is typically programmed with application software and communication software. Preferably, such software is written in C language or another conventional high level programming language. Preferably, each of the processors (30, 32, and 34) communicate with the other processors using either the BSC LAN 36 or the VME bus 38. Preferably, the processors (30, 32, and 34) communicate with each other using a network configuration and communication techniques well-known in the art.

Calls originating from the mobile subscriber 22 are received over the T1 line 42 and processed by the GRP 34. The GRP 34 then determines. based on loading conditions, which CCP 32 should handle the call. The call is then handed off to the selected CCP 32 assigned to the call. The CCP 32 then determines which CAP 30 should be used.

In the case of a call terminating to a mobile subscriber 22, the call originates from the MSC 14 over an E1 line 40 and is then routed to a GRP 34. The GRP 34 allocates a CCP 32, which then allocates a CAP 30.

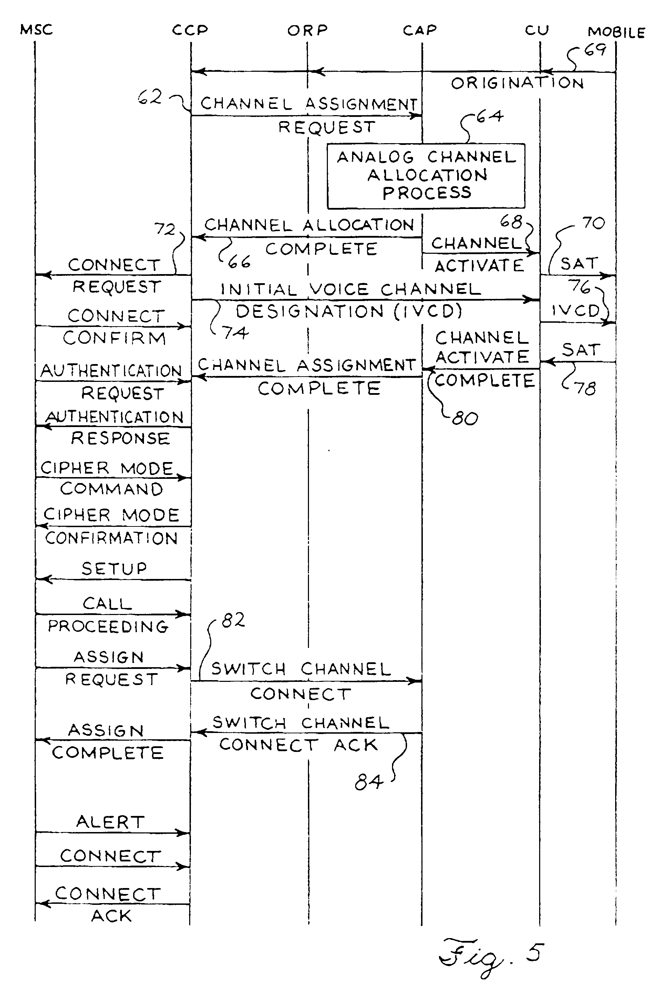

Figure 3 illustrates a block diagram of a preferred component layout for the BTS 20. The BTS 20 communicates with the BSC 18 over T1 communication lines 42. A channel unit (CU) 50 receives data from the T1 lines 42 and generates an analog signal to be sent over an RF communication line 52. The RF communication line 52 is used to communicate with the mobile subscriber 22 over a cell (not shown).

The CU 50 is preferably either an analog channel unit, a dual mode channel unit, or a digital channel unit. Each CU 50 contains a plurality of communication channels available for transmissions. These channels may be analog control channels, analog traffic channels, digital traffic channels, analog scanning receiver channels, or digital scanning receiver channels. Analog control channels are used to communicate between the BTS 20 and the mobile unit 22 before the mobile unit 22 has been assigned a voice channel for communication. An analog traffic channel may be used for voice communication between the BTS 20 and the mobile subscriber 22. Each analog traffic channel is associated with a specific predefined frequency used for radio transmission over the RF communication link 52. Alternatively, in a digital communication system, a digital traffic channel may be used instead of the analog traffic channel. In a preferred TDMA-3 embodiment, each frequency contains three slot pairs and each slot pair is associated with a transmission channel. The allocation of frequencies to traffic channels is defined in detail by U.S. Cellular Standard IS-54.

Each CU 50 includes its own processor, such as an Intel 960 32-bit microprocessor unit, along with a hardware circuit for transmitting information over each of the channels. Each CU 50 communicates with other CUs 50 in the same BTS 20 over the BTS LAN 36.

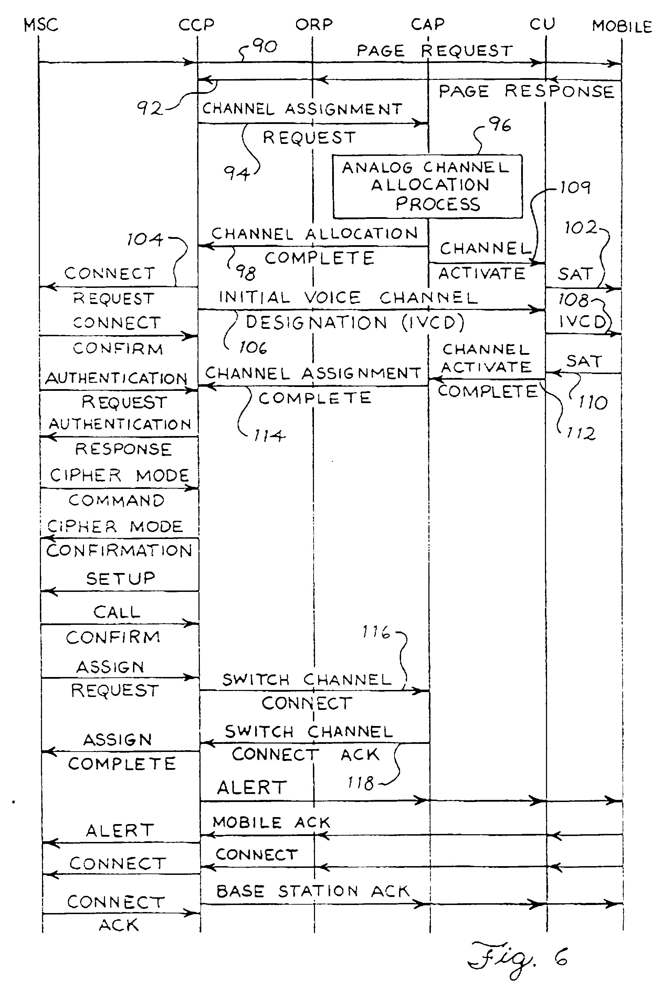

Figure 4 illustrates a configuration database 54 of the OMC 16. The database 54 includes one or more quality channel pools 56. The OMC 16 communicates with a CAP 30 over the E1 transmission line 40. The CAP 30 includes a channel allocation process 64 and is in communication with a CU 50 over a T1 transmission line 42. The CU 50 preferably contains a signal quality measurement unit 58.

The configuration database 54 is operator-configurable and includes information on the various connections between the MSC 14 and the BSC 18, and components within the BSC 18, such as CAPs 30, CCPs 32, and GRPs 34. The database 54 also includes data representing various connections between ports within each CU 50 that may be used for transmission over a cell and a corresponding CAP 30. Thus, the database 54 preferably contains a data representation of the entire digital cellular network 10.

According to a presently preferred embodiment, the configuration database 54 includes at least one quality channel pool 56. The preferred quality channel pool 56 is created by defining a range of acceptable signal quality values 53, and assigning the range 53 to a quality channel pool index within the configuration database 54. Preferably, the signal quality values are receive-signal-strength-indication (RSSI) values. RSSI values are based on the well known commercial U.S. Cellular Standard IS-54.

An operator may create a single pool or multiple pools. Each pool 56 preferably has a distinct non-overlapping range of signal quality values 53. Also, the operator may define a blocking pool having a range of quality signal values 53 that are not acceptable for transmission. For example, the operator may define a first quality pool having the lowest RSSI signal quality values (e.g. -115 to -127 dB), a second pool having higher RSSI signal quality values (e.g, -100 to -115 dB), a third pool having even higher RSSI signal quality values (e.g. -80 to -100 dB), and a blocking pool having the highest RSSI signal quality values (e.g. 0 to -80 dB). In the present example, the RSSI values of the first three pools are acceptable for transmission, but the RSSI signal values of the blocking pool are not acceptable for transmission.

The measurement unit 58 periodically measures the RSSI for each channel in the CU 50. When a channel's RSSI value falls out of the range 53 of the assigned quality channel pool 56, the CU 50 dynamically moves the channel into another channel quality pool 56 based on a comparison of the new RSSI value and the channel quality pool range 53. The database 54 may be reconfigured and the quality channel pools 56 may be modified, deleted, or new channel quality pools 56 may be created when desired.

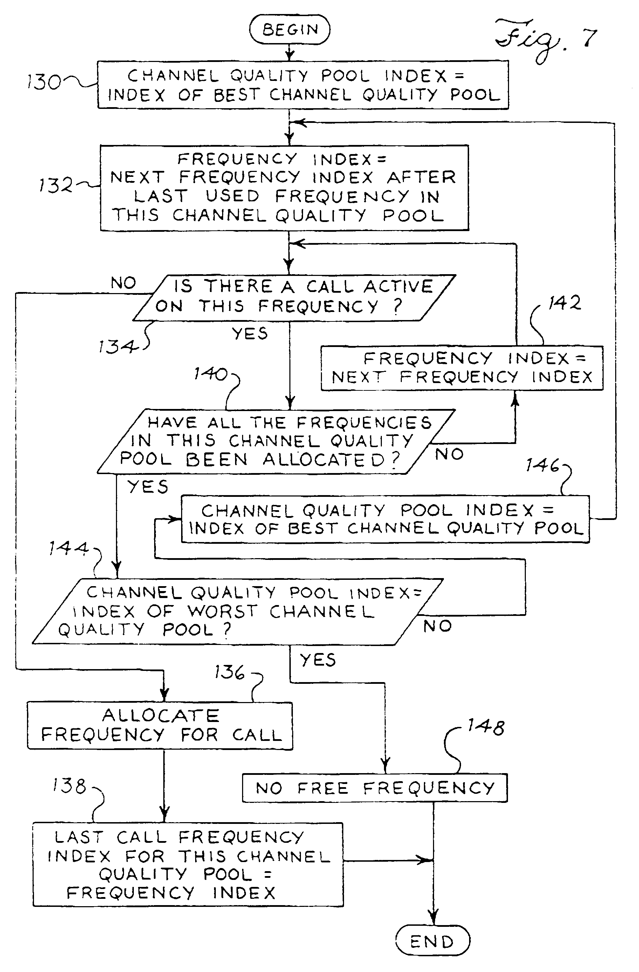

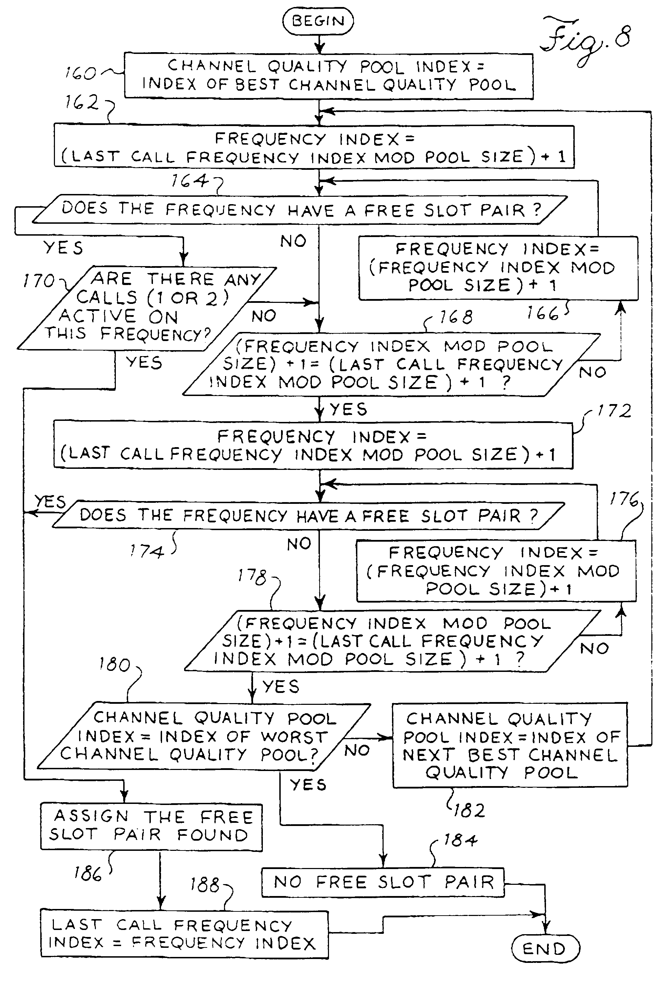

After at least one channel quality pool 56 has been created in the configuration database 54, the OMC 16 may download the channel quality pool 56 via the E1 transmission line 40 to the CAP 30. The CAP 30 periodically receives signal quality values, preferably RSSI values, which are measured by the measurement unit 58 in the CU 50. Such measurements are preferably performed for each channel that may be used for transmission over a cell. The CAP 30 receives the signal quality values from the CU 50 over the T1 transmission line 42. The CAP 30 then compares each channel (e.g. C1-C6) to the range 53 of each pool 56 and, based on this comparison, decides whether to place a particular channel into a channel quality pool 56. A channel may be placed in a pool 56 by storing an index number associated with the channel into a memory location associated with the quality channel pool 56. After all of the channels are placed in a channel quality pool 56, the CAP 30 may then begin to allocate channels using the channel allocation process 64. The channel allocation process may preferably be either the analog channel allocation process described below in reference to Figure 7 or the TDMA-3 channel allocation process described below in reference to Figure 8.

Figure 5 illustrates a message flow diagram for a call originating from a mobile subscriber 22. First, the mobile subscriber 22 sends an origination message 60 to the CU 50. The GRP 34 receives the message 60 and allocates a CCP 32 based on loading conditions. The CCP 32 responds by sending a channel-assignment-request message 62 to a CAP 30. The CAP 30 then performs the channel allocation process 64, preferably using either the channel allocation process described in reference to Figure 7 or the TDMA-3 channel allocation process described in reference to Figure 8.

After a channel has been allocated by the channel allocation process 64, the CAP 30 sends a channel-allocation-complete message 66 to the CCP 32 and sends a channel-activate-message 68 to the CU 50. Upon receipt of the channel activate message 68, the CU 50 sends a supervisory audio tone (SAT) 70 over the RF communication link 52. The CCP 32 sends a connect-request-message 72 to the MSC 14. The CCP 32 then sends an initial-voice-channel-designation (IVCD) message 74 to the CU 50. The CU 50 passes on the IVCD message 74 to the mobile subscriber 22 over the RF communication link 52 and over the particular cell being used. The IVCD message 74 instructs the mobile subscriber unit 22 to switch frequencies from the control frequency to the frequency corresponding to the channel selected by the channel allocation process 64.

After the mobile subscriber 22 changes frequencies to the channel selected by the channel allocation process 64, the mobile unit 22 sends a supervisory audio tone (SAT) 78 to the CU 50. The CU 50 then sends a channel-activate-complete message 80 to the CAP 30 which then sends a channel-assignment-complete message to the CCP 32. After various standard messages are sent between the CCP 32 and the MSC 14, the CCP 32 sends a switch-channel-connect message 82 to the CAP 30. The CAP 30 responds by sending a switch-channel-acknowledge message 84 to the CCP 32. At this time, the cellular system 10 has established a communication path from the mobile subscriber 22 to the desired destination. Thereafter, a user of the mobile subscriber unit 22 may communicate over the digital cellular network 10. Thus, as shown in Figure 5, the channel allocation process 64 may be performed during the set up of a cellular telephone call originating from a subscriber 22 over a digital cellular network 10. As those skilled in the art will appreciate, the channel allocation process is not limited to call setup and may be performed any time a channel needs to be allocated such as during call handoff.

Figure 6 shows a message flow diagram for a call terminating to a mobile subscriber 22. The call begins with a page-request-message 90 sent from the MSC 14 to the CCP 32 and to the CU 50. The CU 50 receives the page-request-message 90 and sends a page request over the RF communication link 52 to the mobile subscriber 22. The mobile subscriber 22 responds by sending a page response message 92 to the CU 50. The CU 50 passes the page-response message 92 to the GRP 34 which, in turn, delivers the page-response message 92 to the CCP 32. The CCP 32, upon receipt of the page response message 92, sends a channel-assignment-request message 94 to the CAP 30. The CAP 30 then performs the channel allocation process 96, preferably using either the process described in reference to Figure 7 or the TDMA-3 process described in reference to Figure 8.

Upon completion of the channel allocation process 96, the CAP 30 sends a channel-allocation-complete message 98 to the CCP 32. The CAP 30 also sends a channel activate message 100 to the CU 50. The CU 50 then sends a supervisory audio tone (SAT) 102 to the mobile subscriber 22. The CCP 32, upon receipt of the channel allocation complete message 98, sends a connect message 104 to the MSC 14 and sends an IVCD message 106 to the CU 50. In response, the CU 50 sends an IVCD message 108 to the mobile subscriber 22. The IVCD message 108 instructs the mobile subscriber unit 22 to switch from the control frequency to a frequency corresponding to the channel selected by the channel allocation process 96.

When the mobile subscriber 22 has switched its frequency to the selected channel, the mobile subscriber 22 responds by sending an SAT 110 to the CU 50. The CU 50 then sends a channel-activate-complete message 112 to the CAP 30. The CAP 30 then sends the channel-assignment-complete message 114 to the CCP 32. After various standard messages are sent between the CCP 32 and the MSC 14, the CCP 32 sends a switch connect message 116 to the CAP 30. The CAP 30, in turn, responds with a switch-channel-connect-acknowledge message 118. At this point, the mobile subscriber unit 22 is in communication with the outside caller, through the CU 50, the CAP 30, the CCP 32, and the MSC 14.

Figure 7 is a flow diagram illustrating a channel allocation process according to a presently preferred embodiment of the invention. The channel allocation process preferably corresponds to the process 64 performed in Figure 5 or the process 96 performed in Figure 6. First, the channel allocation process selects a quality channel pool by setting a channel quality pool index equal to an index of the best channel quality pool available based on measured RSSI values 130. Next, a channel is selected from the pool using a round robin technique by setting a frequency index equal to the next frequency in the pool 132. In a preferred embodiment of the channel allocation process using the round robin technique, each of the frequencies in the pool have a sequentially assigned index number from one up to the number of frequencies in the pool. A memory location is used to store the index number associated with the last frequency allocated. The round robin technique preferably sets the index number to the last frequency index number MOD pool size plus one. For example, if the last frequency allocated has index number three, then the round robin technique would select index number four (if there are at least four frequencies in the pool). If there are only three frequencies in the pool, then the round robin technique would select index number one. Thus, the round robin technique takes into consideration the frequency used for the last call selected from this channel quality pool 132 in order to more uniformly distribute activity among the various transmission hardware circuits.

Next, the channel allocation process determines whether a call is active on the selected frequency 134. If there is no call on this frequency, then the channel associated with this frequency is allocated 136. The frequency index selected for this call is stored for later use 138 by the channel allocation process.

If there is a call on the selected frequency, the channel allocation process determines whether all of the remaining frequencies in the channel pool have been checked at 140. If not, the frequency index is set to the next frequency index in the channel quality pool 142 using the round robin technique, and the process continues at 134 as described above. However, if all of the frequencies in the channel pool have been checked, the process determines whether all quality channel pools have been checked at 144. If so, then there are no free frequencies available 148, and the channel allocation process terminates.

Otherwise, the next quality channel pool is selected at 146 by setting the channel quality pool index equal to the index of the next best channel quality pool available. The process then continues at 132 as described above until either a channel is allocated or the process determines that there are no available channels. Thus, the channel allocation process preferably selects channels associated with frequencies having at least acceptable signal quality by selecting channels from quality channel pools having measured signal quality values within a user defined range. The present invention preferably uniformly exercises the transmission hardware used to make calls using the round robin technique, thereby reducing the need to repair or replace the transmission hardware units.

Figure 8 is a flow chart of a preferred embodiment of the TDMA-3 channel allocation process. First, a channel quality pool index is set equal to an index of the channel quality pool having the best signal quality, preferably based on measured RSSI values 160. Setting the quality pool index at 160 selects the quality channel pool associated with the selected index. Next, a frequency index is set equal to a last call frequency index MOD pool size plus one at 162, thereby selecting the next frequency in the selected quality channel pool. Step 162 implements a round robin technique equalizing usage among each frequency in the quality channel pool. Next, the process determines whether the frequency associated with the selected frequency index has a free slot pair 164. A free slot pair is used to communicate information over the selected frequency. In a TDMA-3 system, each frequency can support three slot pairs. If the frequency has a free slot pair, the process determines whether there are any active calls already on the selected frequency 170. If there are active calls on the selected frequency, then the free slot pair is assigned 186. After assigning a free slot pair 186, the process sets the last call frequency index to the selected frequency index at 188 and the process is completed. The last call frequency index is used the next time the channel allocation process is executed.

Otherwise, a free slot pair is not assigned and the channel allocation process attempts to select another frequency 168. Thus, the channel allocation process gives priority to frequencies that are partially packed and fully packs each frequency before allocating a channel on an empty frequency. Comparing (the frequency index MOD the quality pool size incremented by one) against (the last call frequency index MOD the pool size incremented by one) at 168 determines whether all frequencies in the selected quality channel pool have been processed by the loop comprising steps 164, 166 and 168. If all of the frequencies in the quality channel pool have not been checked, processing continues at 166. If all frequencies in the quality channel pool have been checked, then processing continues at 172.

The next frequency in the quality channel pool is selected by setting the frequency index equal to the frequency index MOD the pool size plus one at 166. Performing a MOD function on the pool size resets the index to the first frequency after the last frequency in the pool has been selected. Thus, the MOD function provides a circular buffer or round robin allocation. After the frequency index has been set to the next frequency in the quality channel pool 166, processing continues as described above at step 164.

The frequency index is set to the last call frequency index MOD the pool size plus one at step 172. Step 172 may only be reached when all frequencies in the selected quality channel pool do not have a free slot pair and an existing active call on that frequency. Step 172 begins checking each frequency in the quality channel pool beginning with the last frequency allocated for a free slot pair regardless of whether the frequency is partially packed or empty. Thus, step 174 checks the frequency selected to determine if a free slot pair is available. If so, processing continues at step 186 and the free slot pair is assigned. If the selected frequency does not have a free slot pair, then the process compares the frequency index MOD the pool size plus one against the last call frequency index MOD the pool size plus one at 178.

The comparison 178 determines whether all frequencies in the quality channel pool have been checked. If not, then other frequencies in the quality channel are then checked by setting the frequency index equal to the frequency index MOD pool size plus one at 176. After selecting the next frequency in the pool 176, processing continues at step 174. If all frequencies in the quality channel pool have been checked 178, the channel quality pool index is compared to the index of the least desirable channel quality pool 180. If other quality channel pool indexes are available, then the channel quality pool index is set equal to the index of the next best channel quality pool 182 and processing continues at step 162. Otherwise, all quality channel pools and all frequencies in the pools have been checked and processing is completed.

Of course, it should be understood that a wide range of changes and modifications can be made to the preferred embodiment described above. For example, signal quality measurements preferably use RSSI values; however, any suitable method of measuring signal quality may be used such as carrier to interference. Also, although specific reference was given to the U.S. standard for specific transmission frequencies, the invention is equally applicable to countries other than the U.S. For each country outside the U.S., the specific transmission frequencies would correspond to technical standards in the specific country. Also, although an embodiment of the method of the present invention was described in the context of specific cellular hardware, the method is not limited to the particular hardware used, and may be applicable to other communication products, such as ETDMA® products.

It is therefore intended that the foregoing detailed description be regarded as illustrative rather than limiting and that it is the following claims, including all equivalents, which are intended to define the scope of this invention.

## Claims

1. A method of allocating channels in a cellular communications system (10) comprising the following steps:
providing a plurality of transmission channels capable of transmitting information over a cell of said cellular system (10);
measuring a signal quality level for each of said channels; and
selecting at least one of said transmission channels based on said measured signal quality level.

2. The method of claim 1, further comprising the following steps:
defining a first quality channel pool (56);
defining a first range of signal quality levels (53) for said pool (56);
placing channels having a signal quality level within said first range of signal quality levels (53) into said first quality channel pool (56); and
selecting said at least one channel from channels placed in said quality channel pool (56).

3. The method of claim 2, herein said channels are selected from said quality channel pool (56) using a round robin selection process.

4. The method of claims 2 or 3, further comprising the steps of
defining a second quality channel pool (56);
defining a second range of signal quality levels (53) for said second quality channel pool (56);
placing channels having a signal quality level within said second range of signal quality levels (53) into said second quality channel pool (56); and
selecting a free channel in said second quality channel pool (56) when all of said channels in said first quality channel pool (56) are busy.

5. The method of any one or more of claims 2-4, wherein said first quality channel pool and said range of quality signal levels for said first quality channel pool are reconfigurable.

6. The method of any one or more of claims 2-5, wherein each of said channels is associated with an analog transmission frequency.

7. The method of any one or more of claims 2-6, wherein each of said channels is associated with a slot pair of a frequency in a TDMA system and a partially packed frequency is selected before a channel associated with an empty frequency.

8. The method of any one or more of claims 2-7, further comprising the steps of
defining a blocking pool;
placing channels having a signal quality level outside said first range of signal quality levels into said blocking pool; and
blocking transmission for all channels placed in said blocking pool.

9. An apparatus for performing the method of any one or more of claims 1-8 comprising:
at least one cellular unit (50) providing transmission channels and measuring the signal quality for each of said channels; and
at least one channel access processor (30) in communication with said channel unit and including a routine for performing a channel allocation process (64);

10. The apparatus of claim 9, further comprising:
a cell used for communicating with a subscriber (22);
a base transceiver station (20) assigned to said cell and including at least one channel unit (50) providing transmission channels and measuring the signal quality for each channel;
a base station controller (18) in communication with said base transceiver station (20) and including said channel access processor (30); and
a mobile switching center (14) in communication with said base station controller (18) and in communication with the public switched telephone network for establishing a communication path between the subscriber (22) and the telephone network.
